# FASCICULE DE BREVET EUROPEEN

(11) **EP 0 890 779 B1**
(45) Date de publication et mention de la délivrance du brevet: **14.01.2004**
(21) Numéro de dépôt: 98401761.6
(22) Date de dépôt: 10.07.1998
(51) Int. Cl.: F16L 55/11, F16L 57/00, F16L 13/02

(54) **Procédé d'obturation d'un tube au moyen d'une pastille soudée**
Verfahren zum Verschliessen eines Rohres mittels Anschweissdeckel
Method for sealing a pipe using a welded cap

(30) Priorité: 11.07.1997 FR 9708878
(43) Date de publication de la demande: 13.01.1999
(73) Titulaire: Brandt Industries, 92500 Rueil Malmaison (FR)
(72) Inventeur: Bradu, Thierry, 94117 Arcueil, Cedex (FR); Flammang, Denis, 94117 Arcueil Cedex (FR)
(74) Mandataire: Santarelli

(56) Documents cités:
- EP-A- 0 781 700
- DE-A- 2 632 823
- FR-A- 587 371
- US-A- 2 290 515

## Description

L'invention se rapporte à un procédé d'obturation d'un tube au moyen d'une pastille soudée.

Dans un tube où circule un fluide, on peut souhaiter obturer l'extrémité du tube. Cette obturation doit être étanche au fluide. Il est connu, pour réaliser cette obturation, de boucher l'extrémité du tube au moyen d'une pastille soudée en bout du tube. Par exemple pour un tube en acier, on peut souder électriquement par résistance la pastille. Ce procédé connu est sensible aux défauts de forme du tube et de la pastille dans leurs zones en contact. Il est également sensible au positionnement relatif de la pastille par rapport au tube. Cette sensibilité entraîne un manque de fiabilité dans la réalisation de l'obturation du tube.

Le document FR-587 371 décrit un procédé d'assemblage de deux pièces tubulaires, notamment des conduites. Le procédé de soudage décrit ici permet de ne pas avoir de diminution de diamètre au niveau de la soudure. Un renflement est réalisé sur un tuyau tandis que l'autre est évasé à son extrémité. La présence du renflement permet au tuyau soudé de se dilater librement en cas de production de tensions axiales.

L'invention a pour but d'améliorer la fiabilité de l'obturation au moyen d'un procédé de soudage moins sensible que les moyens connus au défaut de forme et de position d'un tube et d'une pastille.

Plus précisément, l'invention a pour objet un procédé d'obturation d'un tube au moyen d'une pastille soudée sur l'extrémité du tube. Le procédé est caractérisé en ce que le procédé comporte les étapes suivantes :
- déformation de l'extrémité du tube (1) pour réaliser une zone (4) où s'exercent les contraintes de flexion correspondant à un effort longitudinal exercé dur l'extrémité du tube (1) ;
- mise en contact de la pastille (10) avec l'extrémité du tube (1)
- soudage de la pastille (10) sur l'extrémité du tube (1), l'effort longitudinal étant exercé, pendant l'opération de soudage, sur la pastille (10) pour la plaquer sur l'extrémité du tube (1).

On peut utiliser l'invention de façon particulièrement avantageuse lorsqu'on cherche à obturer l'extrémité d'un tube à section circulaire en acier galvanisé à l'intérieur duquel se trouve un gaz de combustion comme par exemple du gaz naturel ou du butane. L'étanchéité de l'obturation devant être contrôlée à 30 kPa (300 m bar). Néanmoins, il est bien entendu que l'invention peut s'appliquer à tout fluide, quelle que soit sa pression, contenu dans le tube et à tout tube, quelle que soit sa matière et sa forme, tube dont on cherche à obturer l'extrémité par soudage d'une pastille.

La présente invention sera mieux comprise et d'autres avantages apparaîtront à la lecture de la description détaillée d'un mode de réalisation préférentiel illustré par le dessin annexé, sur lequel :
- la figure 1 représente en coupe un exemple de forme de l'extrémité d'un tube selon l'invention;
- la figure 2 représente en coupe un exemple de forme de pastille selon l'invention;
- la figure 3 représente en coupe la pastille décrite figure 2 soudée sur le tube décrit figure 1.

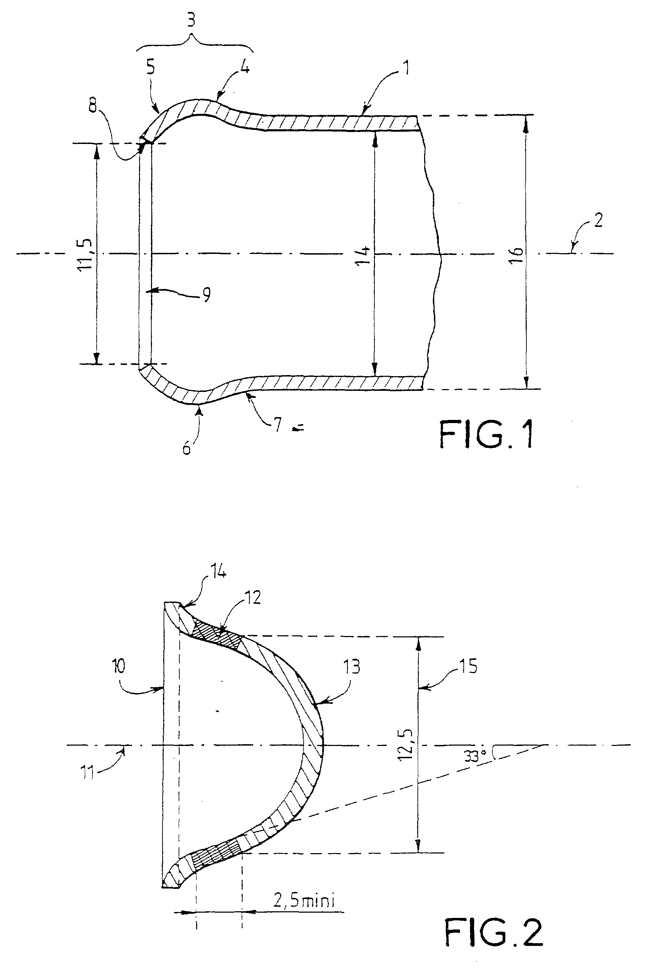

La figure 1 représente l'extrémité d'un tube 1 cylindrique d'axe 2. On déforme l'extrémité du tube 1 pour réaliser un renflement 3. Ce renflement comporte un évasement 4 suivi d'un rétrécissement 5 qui termine le tube. L'évasement 4 et le rétrécissement 5 ont des sections, par des plans perpendiculaires à l'axe 2 du tube 1, qui restent sensiblement circulaires. La surface extérieure de l'évasement 4 comporte par exemple un tronc de cône dont l'angle au sommet est voisin de 30°. La surface extérieure du rétrécissement 5 comporte par exemple un tronc de cône dont l'angle au sommet est voisin de 45°. Le tronc de cône de l'évasement 4 est par exemple raccordé au tube 1 et au rétrécissement 5 par des congés de raccordements 6 et 7 à sections circulaires. Ces congés 6 et 7 évitent les angles vifs qui d'une part fragiliseraient le tube 1 et qui d'autre part sont plus difficiles à réaliser que des congés. Le renflement 3 est avantageusement réalisé avec des moyens serpblables à ceux utilisés couramment pour réaliser un collet sur un tube semblable au tube 1. L'épaisseur du tube 1 au niveau du renflement 3 est sensiblement égale à l'épaisseur du tube 1 d'origine. Avant la réalisation du renflement 3, le tube 1 avait été tronçonné perpendiculairement à l'axe 2 créant ainsi une surface 8 sensiblement plane et perpendiculaire à l'axe 2. Après réalisation du renflement 3, la surface 8 forme sensiblement un tronc de cône perpendiculaire au tronc de cône du rétrécissement 5. Le rétrécissement 5 modifie l'ouverture 9 de l'extrémité du tube 1. Cette ouverture 9 peut avoir un diamètre inférieur au diamètre intérieur du tube.

Un exemple de dimensions pour le tube est le suivant:
- diamètre extérieur du tube d'origine avant d'effectuer le renflement : 16 mm;
- diamètre intérieur du tube d'origine avant d'effectuer le rendement : 14 mm;
- diamètre intérieur de l'ouverture 9 du rétrécissement 5: 11,5 mm.

Ces dimensions sont reportées sur la figure 1.

L'objectif principal de la déformation du tube est d'obtenir une zone qui permet au tube de se déformer longitudinalement de façon nettement plus importante que ne le ferait un tube cylindrique lorsque l'extrémité du tube est soumise à un effort longitudinal. Cet objectif est atteint au moyen d'une zone principalement soumise à des contraintes de flexion. Dans l'exemple représenté figure 1 cette zone est l'évasement 4.

La figure 2 représente une pastille 10 de révolution réalisée par exemple par emboutissage d'une rondelle plate. Cette pastille 10 comporte un axe 11, elle est convexe. Les sections droites de la pastille 10 perpendiculairement à l'axe 11 sont sensiblement circulaires. L'épaisseur de la pastille 10 mesurée perpendiculairement à son contour est sensiblement constante. Sa valeur est avantageusement voisine de celle du tube 1 représenté figure 1 afin de permettre un meilleur soudage de la pastille 10 sur le tube 1. La zone 12 de la pastille 10 utilisée pour le soudage est représentée sur la figure 2 par des hachures croisées. Cette zone 12 comporte une forme sensiblement comprise entre deux troncs de cône d'axe 11 et d'angle au sommet par exemple voisin de 33°. Ces deux troncs de cône sont distants de l'épaisseur souhaitée pour la pastille 11. Le diamètre 15 extérieur d'une section droite du tronc de cône dans sa partie la plus resserrée est voisine de la valeur du diamètre de l'ouverture 9 de l'extrémité du tube 1 représenté figure 1. La valeur du diamètre 15 est avantageusement légèrement supérieure à la valeur du diamètre de l'ouverture 9. Le diamètre 15 est par exemple égale à 12,5 mm. La longueur de la zone 12 mesurée suivant l'axe 11 est avantageusement au moins égale à 2,5 fois l'épaisseur de la pastille. Les dimensions données précédemment à titre d'exemple pour la pastille sont données en rapport avec les dimensions du tube 1 tel que représenté figure 1.

Du côté du sommet des troncs de cône formant sensiblement la zone 12, la pastille 10 se referme par une forme 13 quelconque. Avantageusement, pour faciliter la fabrication de la pastille 10, cette forme 13 est sensiblement comprise entre deux portions de sphères concentriques chacune tangente à un des troncs de cône.

Du côté opposé au sommet des troncs de cône formant sensiblement la zone 12, la pastille 10 se prolonge par une forme 14 par exemple évasant la pastille.

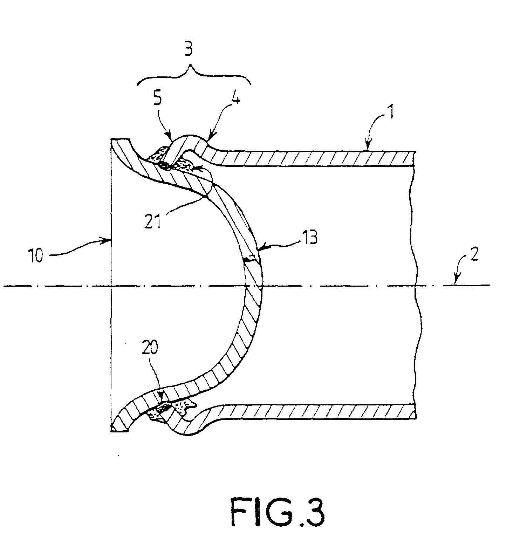

La figure 3 représente une pastille 10 soudée sur un tube 1. La pastille 10 et le tube 1 sont en acier galvanisé. Avant de procéder à l'opération de soudage, on vient positionner la pastille 10 en contact sur le tube 1 de telle sorte que la zone 12 de la pastille représentée figure 2 soit sensiblement en contact avec les bords de l'ouverture 9 du tube 1 représenté figure 1. La pastille 10 est orientée de telle sorte que la forme 13 de la pastille pénètre à l'intérieur du tube 1. Une fois ce positionnement réalisé, on procède au soudage par exemple électrique par résistance en faisant passer un courant électrique de forte intensité entre la pastille 10 et le tube 1 au moyen de deux électrodes, l'une en contact avec la pastille 10, l'autre avec le tube 1. Les électrodes ne sont pas représentées. Celle qui est en contact avec la pastille 10 a par exemple la forme d'un doigt épousant la partie intérieure de la forme 13. Cette électrode exerce un effort sur la pastille 10 suivant son axe 11 et en direction du tube 1. Celle qui est en contact avec le tube 1 est par exemple en deux parties et a une forme de pince épousant la surface du tube 1 dans sa partie où on n'a pas réalisé le renflement 3.

Pour équilibrer l'effort exercé par l'électrode en appui sur la pastille 10, l'électrode en contact avec le tube 1 vient en contact sur l'évasement 4.

Un avantage lié à ce contact entre l'électrode et l'évasement 4 est que l'électrode ne peut pas glisser suivant l'axe 2 du tube 1 contrairement à un tube ne présentant pas de renflement 3 ou toute autre forme équivalente. Ceci permet d'élargir les tolérances du tube et des deux parties de l'électrode ; ce qui simplifie leur réalisation.

L'effort exercé par la pastille 10 sur le tube 1 va tendre à déformer en particulier l'évasement 4 du tube 1. L'évasement 4 va subir principalement des contraintes de flexion ce qui permet d'obtenir une déformation nettement plus importante que celle qui serait obtenue sur un tube simplement cylindrique qui ne travaillerait qu'en compression. L'intérêt de cette possibilité de déformation importante est de permettre un bon plaquage de la totalité de la surface 8 représentée figure 1 sur la pastille, tout en s'affranchissant de tolérances serrées dans la réalisation de la pastille 10 et du tube 1.

Un autre avantage est lié aux formes précédemment décrites de la pastille 10 et de l'extrémité du tube 1. Le rétrécissement 5 vient en contact avec la pastille 10 de façon sensiblement perpendiculaire. Ainsi, la soudure occupe un volume 20 bien maîtrisé, contrairement au volume qu'occupe la soudure lorsque deux pièces d'épaisseur minces sont soudées tangentiellement. La maîtrise de ce volume 20 permet d'une part d'obtenir une soudure régulièrement répartie sur toute la zone de contact entre le tube 1 et la pastille 10. Elle permet d'autre part de ne pas y enfermer de zinc, dans le cas où on utilise un tube 1 et une pastille (10) en acier galvanisé. En effet, le zinc a une tenue mécanique bien inférieure à celle de l'acier. Enfermer le zinc dans la soudure réduirait la résistance mécanique de la soudure.

Le tube 1 et la pastille 10 représentés en figure 3 sont en acier galvanisé. Dans la zone en contact entre la pastille 10 et le tube 1, au moment où le métal est en fusion, le zinc recouvrant le tube 1 et la pastille 10 s'échappent de la zone en fusion et se solidifie de nouveau après l'opération de soudage à l'extérieur du volume 20 sous forme d'une barbe 21 ayant une forme extérieure assez aléatoire. Le zinc a néanmoins l'avantage à l'état liquide de bien mouiller le métal chaud de la pastille 10 et du tube 1, il reforme ainsi le traitement de surface initial de galvanisation.

Un avantage lié au soudage électrique par résistance est qu'il ne nécessite pas de métal d'apport. Néanmoins pour obturer un tube en acier galvanisé à section circulaire dans lequel se trouve un gaz, des essais ont montrés qu'on obtenait une soudure étanche et bien reproductible.

## Revendications

1. Procédé d'obturation d'un tube (1) au moyen d'une pastille (10) soudée sur l'extrémité du tube, ce tube présentant initialement une surface (8) sensiblement plane et perpendiculaire à l'axe (2) du tube, **caractérisé en ce que** le procédé comporte les étapes suivantes :
- déformation de l'extrémité du tube (1) pour réaliser une zone (4) où s'exercent les contraintes de flexion correspondant à un effort longitudinal exercé sur l'extrémité du tube (1) ;
- mise en contact de la pastille (10) avec l'extrémité du tube (1), la surface (8) de l'extrémité du tube venant plaquer sur la pastille (10) ;
- soudage de la pastille (10) sur l'extrémité du tube (1), l'effort longitudinal étant exercé, pendant l'opération de soudage, sur la pastille (10) pour la plaquer sur l'extrémité du tube (1).

2. Procédé selon la revendication 1, **caractérisé en ce que** l'extrémité du tube (1) comporte un renflement (3) comprenant un évasement (4) suivi d'un rétrécissement (5), le rétrécissement (5) modifiant l'ouverture (9) de l'extrémité du tube (1).

3. Procédé selon l'une des revendications précédentes, **caractérisé en ce que** le tube (1) est à section circulaire.

4. Procédé selon l'une des revendications précédentes, **caractérisé en ce que** la pastille (10) est convexe et **en ce que** la convexité est orientée vers le tube (1).

5. Procédé selon l'une des revendications précédentes, **caractérisé en ce que** la pastille (10) est d'épaisseur sensiblement constante et comporte une zone (12) sensiblement comprise entre deux troncs de cône de même axe (11), cône dont un est obtenu par la translation de l'autre suivant son axe (11) et distants de l'épaisseur de la pastille, zone (12) dont la valeur du diamètre (15) extérieur de la petite section circulaire est voisine de la valeur du diamètre de l'ouverture circulaire de l'extrémité du tube (1).

6. Procédé selon la revendication 5, **caractérisé en ce que** la valeur du diamètre (15) extérieur de la plus petite section circulaire est légèrement supérieure à la valeur du diamètre de l'ouverture (9) circulaire de l'extrémité du tube (1).

7. Procédé selon l'une quelconque des revendications 5 et 6, **caractérisé en ce que** les troncs de cônes ont un angle au sommet voisin de 33°.

8. Procédé selon l'une quelconque des revendications 5 à 7, **caractérisé en ce que** la pastille (10) comporte, du coté du sommet des troncs de cônes, une surface (13) sensiblement comprise entre deux portions de sphère tangentes aux troncs de cônes.

9. Procédé selon l'une quelconque des revendications 5 à 8, **caractérisé en ce que** la longueur de la zone (12) suivant l'axe (11) est au moins égale à 2,5 fois l'épaisseur de la pastille (10).

10. Procédé selon l'une des revendications précédentes, **caractérisé en ce que** la pastille (10) et le tube (1) sont en acier galvanisé.

11. Procédé selon l'une des revendications précédentes, **caractérisé en ce que** le soudage est un soudage électrique par résistance.

12. Procédé selon l'une quelconque des revendications 2 à 11, **caractérisé en ce que** l'évasement (4) comporte un tronc de cône dont l'angle au sommet set voisin de 30°.

13. Procédé selon l'une quelconque des revendications 2 à 12, **caractérisé en ce que** le rétrécissement (5) comporte un tronc de cône dont l'angle au sommet est voisin de 45°.

## Patentansprüche

1. Verfahren zum Verschließen eines Rohrs (1) mittels eines Plättchens (10), das an das Ende des Rohrs geschweißt wird, wobei dieses Rohr anfänglich eine im wesentlichen ebene und zur Achse (2) des Rohrs senkrechte Oberfläche (8) aufweist, **dadurch gekennzeichnet, daß** das Verfahren die folgenden Schritte umfaßt:
- Verformung des Endes des Rohrs (1), um eine Zone (4) herzustellen, in der die Biegespannungen entsprechend einer Längskraft, die auf das Ende des Rohrs (1) ausgeübt wird, wirken;
- in Kontakt bringen des Plättchens (10) mit dem Ende des Rohrs (1), wobei die Oberfläche (8) des Endes des Rohrs auf das Plättchen (10) drückt;
- Schweißen des Plättchens (10) an das Ende des Rohrs (1), wobei die Längskraft während des Schweißvorgangs auf das Plättchen (10) ausgeübt wird, um es an das Ende des Rohrs (1) zu drücken.

2. Verfahren nach Anspruch 1, **dadurch gekennzeichnet, daß** das Ende des Rohrs (1) eine Ausbauchung (3) mit einer Aufweitung (4) gefolgt von einer Einengung (5) aufweist, wobei die Einengung (5) die Öffnung (9) des Endes des Rohrs (1) modifiziert.

3. Verfahren nach einem der vorangehenden Ansprüche, **dadurch gekennzeichnet, daß** das Rohr (1) einen kreisförmigen Querschnitt aufweist.

4. Verfahren nach einem der vorangehenden Ansprüche, **dadurch gekennzeichnet, daß** das Plättchen (10) konvex ist und daß die Konvexität zum Rohr (1) orientiert ist.

5. Verfahren nach einem der vorangehenden Ansprüche, **dadurch gekennzeichnet, daß** das Plättchen (10) eine im wesentlichen konstante Dicke aufweist und eine Zone (12) aufweist, die im wesentlichen zwischen zwei Kegelstümpfen mit derselben Achse (11) liegt, wobei einer der Kegel durch die Translation des anderen entlang seiner Achse (11) und von der Dicke des Plättchens entfernt erhalten wird, wobei der Wert des Außendurchmessers (15) des kleinen kreisförmigen Querschnitts der Zone (12) in der Nähe des Werts des Durchmessers der kreisförmigen Öffnung des Endes des Rohrs (1) liegt.

6. Verfahren nach Anspruch 5, **dadurch gekennzeichnet, daß** der Wert des Außendurchmessers (15) des kleineren kreisförmigen Querschnitts geringfügig größer ist als der Wert das Durchmessers der kreisförmigen Öffnung (9) des Endes des Rohrs (1).

7. Verfahren nach einem der Ansprüche 5 und 6, **dadurch gekennzeichnet, daß** die Kegelstümpfe einen Spitzenwinkel in der Nähe von 33° aufweisen.

8. Verfahren nach einem der Ansprüche 5 bis 7, **dadurch gekennzeichnet, daß** das Plättchen (10) auf der Seite der Spitze der Kegelstümpfe eine Oberfläche (13) aufweist, die im wesentlichen zwischen zwei zu den Kegelstümpfen tangentialen Kugelabschnitten liegt.

9. Verfahren nach einem der Ansprüche 5 bis 8, **dadurch gekennzeichnet, daß** die Länge der Zone (12) entlang der Achse (11) mindestens gleich 2,5-mal der Dicke des Plättchens (10) ist.

10. Verfahren nach einem der vorangehenden Ansprüche, **dadurch gekennzeichnet, daß** das Plättchen (10) und das Rohr (1) aus verzinktem Stahl bestehen.

11. Verfahren nach einem der vorangehenden Ansprüche, **dadurch gekennzeichnet, daß** das Schweißen elektrisches Widerstandsschweißen ist.

12. Verfahren nach einem der Ansprüche 2 bis 11, **dadurch gekennzeichnet, daß** die Aufweitung (4) einen Kegelstumpf aufweist, dessen Spitzenwinkel in der Nähe von 30° liegt.

13. Verfahren nach einem der Ansprüche 2 bis 12, **dadurch gekennzeichnet, daß** die Einengung (5) einen Kegelstumpf aufweist, dessen Spitzenwinkel in der Nähe von 45° liegt.

## Claims

1. A method of closing a pipe (1) by means of a cap (10) welded on the end of the pipe, the tube initially having a substantially flat surface (8) perpendicular to the axis (2) of the tube, **characterised in that** the method includes the following steps:
- deforming the end of the pipe (1) to form a zone (4) in which bending stresses are exerted corresponding to a longitudinal force exerted on the end of the pipe (1) ;
- bringing the cap (10) into contact with the end of the pipe (1), the end surface (8) of the pipe coming into contact on the cap (10);
- welding the cap (10) on the end of the pipe (1), the longitudinal force being exerted, during the welding operation on the cap (10), to urge it against the end of the pipe (1).

2. A method according to Claim 1, **characterised in that** the end of the pipe (1) includes a bulge which comprises a flared portion (4) followed by a convergent portion (5), the convergent portion (5) modifying the mouth (9) at the end of the pipe (1).

3. A method according to Claim 1 or Claim 2, **characterised in that** the pipe (1) is of circular cross section.

4. A method according to one of the preceding Claims, **characterised in that** the cap (10) is convex, and **in that** the convexity is oriented towards the pipe (1).

5. A method according to one of the preceding Claims, **characterised in that** the cap (10) has a substantially constant thickness and includes a zone (12) which is contained substantially between two cone frustums having a common axis (11), one of which cones is obtained by translation of the other one along its axis (11), the cone frustums being spaced apart by the thickness of the cap, the value of the outer diameter (15) of the small circular cross section of the zone (12) being close to the value of the diameter of the circular mouth at the end of the pipe (1).

6. A method according to Claim 5, **characterised in that** the value of the outer diameter (15) of the smallest circular cross section is slightly greater than the value of the diameter of the circular mouth (9) at the end of the tube (1).

7. A method according to either one of Claims 5 and 6, **characterised in that** the cone frustums have an apex angle of approximately 33 degrees.

8. A method according to any one of Claims 5 to 7, **characterised in that** the cap (10) includes, on the same side as the apex of the cone frustums, a surface (13) which lies substantially between two portions of spheres tangential to the cone frustums.

9. A method according to any one of Claims 5 to 8, **characterised in that** the length of the zone (12) along the axis (11) is at least equal to 2.5 times the thickness of the cap (10).

10. A method according to one of the preceding Claims, **characterised in that** the cap (10) and the tube (1) are of galvanised steel.

11. A method according to one of the preceding Claims, **characterised in that** the welding operation is electrical resistance welding.

12. A method according to any one of Claims 2 to 11, **characterised in that** the flared portion (4) includes a cone frustum having an apex angle of approximately 30 degrees.

13. A method according to any one of Claims 2 to 12, **characterised in that** the convergent portion (5) includes a cone frustum having an apex angle of approximately 45 degrees.
